# EUROPÄISCHE PATENTSCHRIFT

(11) **EP 3 197 839 B1**
(45) Veröffentlichungstag und Bekanntmachung des Hinweises auf die Patenterteilung: **20.04.2022**
(21) Anmeldenummer: 15777890.3
(22) Anmeldetag: 23.09.2015
(51) Int. Cl.: C02F 11/16, C02F 11/18, C02F 1/52, C02F 11/04, C02F 11/06, C02F 11/12, C02F 101/10

(54) **VERFAHREN UND ANORDNUNG ZUR ABWASSERBEHANDLUNG**
METHOD AND ARRANGEMENT FOR WASTEWATER TREATMENT
PROCÉDÉ ET DISPOSITIF DE TRAITEMENT DES EAUX USÉES

(30) Priorität: 23.09.2014 DE 102014013813
(43) Veröffentlichungstag der Anmeldung: 02.08.2017
(73) Patentinhaber: awama GmbH, 38122 Braunschweig (DE)
(72) Erfinder: SIEVERS, Michael, 38678 Clausthal-Zellerfeld (DE)
(74) Vertreter: Einsel, Martin
(86) Internationale Anmeldenummer: PCT/EP2015/071870
(87) Internationale Veröffentlichungsnummer: WO 2016/046262

(56) Entgegenhaltungen:
- EP-A1- 0 588 138
- WO-A1-2013/163998
- WO-A2-2009/112208
- DE-A1-102009 035 062
- US-A1- 2012 111 515
- Anonymous: "Wikipedia - Trocknung", Wikipedia, 5 July 2016 (2016-07-05), XP055784278, Retrieved from the Internet: URL:https://de.wikipedia.org/w/index.php?t itle=Trocknung&oldid=143754724 [retrieved on 2021-03-10]
- Péclet: "Absätze 1438; 912 betreffender das Trocknen" In: "Absätze 1438; 912 betreffend das Trocknen", 1 January 1860 (1860-01-01), XP055784449,
- Vauck Wilhelm R.A. ET AL: "Grundoperationen chemischer Verfahrenstechnik" In: "Grundoperationen chemischer Verfahrenstechnik", 1 January 1974 (1974-01-01), Verlag Theodor Steinkopff, XP055784459,

## Beschreibung

Die Erfindung betrifft ein Verfahren zur Abwasserbehandlung, bei dem zumindest Anteile des im Abwasser enthaltenen Klärschlamms einer Hydrolyse unterzogen werden, bei dem die Hydrolyse als thermische Hydrolyse durchgeführt wird, und bei dem nach dem Schritt der Hydrolyse eine Trocknung erfolgt.

Die Erfindung betrifft außerdem eine Anordnung zur Abwasserbehandlung, mit einer Hydrolyseeinrichtung zur Hydrolysebehandlung von Klärschlamm und einem Trockner zur Trocknung von Klärschlamm.

Bei der Abwasserbehandlung fällt in der Regel Klärschlamm an. Klärschlamm ist keineswegs ein nur nachteiliges Nebenprodukt, welches entsorgt werden muss, sondern es stellt vielmehr aufgrund seiner organischen Inhaltsstoffe einen wertvollen Energieträger und aufgrund des enthaltenen Phosphats und Stickstoffs einen Pflanzennährstoffträger dar.

Der Energiegehalt des Klärschlamms kann einerseits durch Verfaulung und Verwertung des anfallenden methanhaltigen Faulgases, andererseits aber auch durch eine Verbrennung des getrockneten Klärschlamms und eine Verwertung der entstehenden Ofengase genutzt werden. Dabei liefert eine Kombination aus Faulung und Entwässerung an einem Standort, sowie die Trocknung und Verbrennung an einem anderen Standort, eine sehr hohe Primärenergienutzung. Die Primärenergienutzung lässt sich weiter erhöhen, indem die vier Verfahren (Faulung, Entwässerung, Trocknung, Verbrennung) an einem gemeinsamen Standort installiert werden, wenn die Trocknung mit Überdruck im Dampfbereich erfolgt und die Entwässerbarkeit des Faulschlamms durch Vorbehandlungsmaßnahmen, insbesondere durch eine thermische Hydrolyse, verbessert wird. Diese Kombination lässt sich mit dem Verzicht auf die Faulung und mit dem Einsatz einer Monoverbrennung am gleichen Standort noch einmal deutlich verbessern.

Unter Hydrolyse wird die Spaltung einer chemischen Verbindung mittels Wasser verstanden. Aufgrund der thermischen Hydrolyse ist dann bei der Trocknung des Faulschlamms weniger Wasser zu verdampfen.

Eine thermische Hydrolysebehandlung von Klärschlamm bei Temperaturen von ca. 60 °C bis 320 °C und einer Behandlungsdauer von ca. 10 Minuten bis zu 2 Stunden verbessert die Verfaulbarkeit von Klärschlamm, so dass bei der Verfaulung ein größerer Abbau des organischen Klärschlammanteils und eine Mehrgasproduktion entstehen. Dadurch werden eine höhere Energieausbeute bei der Faulung sowie ein kleinerer zur entwässernder Klärschlamm-Massenstrom erzielt.

Verschiedene Vorschläge sind bereits aus dem Stand der Technik für eine entsprechende Abwasserbehandlung bekannt. So wird bereits in der DE 43 33 468 C2 ein Verfahren zur Behandlung biogener Restmassen beschrieben, unter anderem auch von Klärschlamm. Der Klärschlamm wird dabei zunächst einer Faulung unterworfen. Anschließend wird der Faulschlamm mittels einer Thermodruckhydrolyse bei Temperaturen von etwa 300 °C behandelt und danach wieder in die Faulung zurückgeführt. Die für die Hydrolyse erforderliche Wärme wird indirekt über Wärmetauscher zugeführt, wobei als Wärmequelle das Hydrolysegas selbst oder auch die Verbrennung von Biogas vorgeschlagen werden.

Aus der DE 198 58 187 C5 ist ein Verfahren zur Behandlung von Klärschlamm bekannt. Der Klärschlamm wird nach Behandlung in einer ersten anaeroben Faulstufe in der thermischen Desintegration zugeführt. Der die thermische Desintegration verlassende Schlamm wird anschließend entweder in einer zweiten anaeroben Faulstufe verfault oder in die erste anaerobe Faulstufe zurückgeführt. Die Wärme für die Hydrolyse wird über Wärmetauscher indirekt zugeführt und nach der erfolgten Hydrolyse ebenfalls über Wärmetauscher wieder abgeführt.

Aus der EP 1 230 167 B1 ist ein Verfahren für die Behandlung von Reststoffen aus der Tierverarbeitungsindustrie bekannt. Diese Reststoffe werden nach Zugabe einer alkalischen Substanz einer thermischen Hydrolysebehandlung bei 20 °C bis 160 °C unterzogen. In weiteren Bearbeitungsschritten erfolgt unter anderem auch eine Trocknung eines Teils des Reststoffes bei Umgebungsdruck oder auch im Vakuum, wobei der Brüden an die Umgebung abgeführt wird. Die Wärmezufuhr für eine thermische Hydrolyse erfolgt indirekt über eine Heizung.

Aus der EP 0 588 138 A1 ist ein Verfahren und eine Vorrichtung zur Wärmerückgewinnung beim chemischen Abbau von Klärschlamm oder Abwasser bekannt. Dabei ist vorgesehen, im heißen Ablauf eine Druckentspannung durchzuführen und den dabei entstehenden Brüden von der wässrigen Phase abzutrennen und zum kalten Zulauf zurückzuführen. Dadurch soll ein Teil der Brüden auskondensieren und den Zulauf aufheizen. Außerdem sind beispielsweise drei hintereinandergeschaltete Blasensäulen vorgesehen, die geflutet, gefahren und von Feststoffsuspension und Gas im Gleichstrom durchströmt werden.

Aus der US 2012/0111515 A1 ist ein Verfahren und eine Vorrichtung zur thermischen Hydrolyse von Biomasse bekannt. Dabei wird vorgeschlagen, die Biomasse zunächst in einem ersten Vorheizungsschritt in etwa kontinuierlich zu erhitzen, dann diese vorerhitzte Biomasse sequentiell in zumindest zwei Reaktoren zu überführen und dann diese Reaktoren durch die Zufuhr von Dampf zu erhitzen und unter Druck zu setzen. Die Reaktoren werden bei einer gegebenen Temperatur und einem Druck über eine gegebene Zeit gehalten. Danach werden die erhitzte und unter Druck gesetzte Biomasse aus den Reaktoren in einen ersten Druckentlastungstank ohne eine wesentliche Reduzierung im Druck überführt und dort der Druck in der Biomasse rasch mit der Hilfe einer Düse entlastet, sodass die Biomasse aufgebrochen wird. Die Biomasse wird dann aus dem ersten Druckentlastungstank zu einem zweiten Druckentlastungstank bei einem niedrigeren Druck als dem Druck im ersten Entlastungstanke weitergeleitet und die behandelte Biomasse zur weiteren Behandlung einer nachfolgenden Einrichtung zugeführt.

Aus der WO 2013/163998 A1 ist ein Verfahren zur kontinuierlichen Behandlung von biologischem Material bekannt. Bei dem Verfahren wird das biologische Material einer Zufuhreinrichtung zugeführt, die als Schleusensystem dient. Dabei wird der Druck in der Zufuhreinrichtung erhöht, das biologische Material aus der Zuführeinrichtung zu einem Reaktor mittels Druckdifferenzen oder Schwerkraft überführt. Optional wird der Druck in dem Reaktor weiter erhöht.

In der EP 1 320 388 B1 wird ein Verfahren zur Behandlung von organischem Material beschrieben. Das organische Material wird zunächst mit Kalk, also CaO und/oder Ca(OH)₂, bei einer Temperatur zwischen 100 °C und 220 °C unter Druck gekocht. Die hierfür erforderliche Wärme wird indirekt zugeführt. Das gekochte organische Material wird anschließend einer Strippanlage zugeführt, wobei aufgrund der Druckentlastung Ammoniak ausgestrippt wird und gleichzeitig gelöste ortho-Phosphate ausgefällt werden. Alternativ kann das gekochte Material vor der Zuführung in die Strippanlage unter anaeroben Bedingungen teilweise zu Biogas umgesetzt werden.

In der EP 1 527 022 B1 wird ein Verfahren zur Klärschlammbehandlung beschrieben. Der Klärschlamm wird dabei mindestens einem Vorbehandlungsschritt unterworfen, zu dem auch eine thermische Hydrolyse bei 50 °C bis 180 °C und einem Druck zwischen 2000 hPa und 40.000 hPa erfolgt. Der vorbehandelte Schlamm wird anschließend aerob oder anaerob verfault. Alternativ werden die nach der Vorbehandlung im Schlamm verbliebenen Feststoffe abgetrennt und einer erneuten thermischen Hydrolyse zugeführt. Die thermische Hydrolyse erfolgt in einem Autoklaven im kleinen Maßstab, das heißt, die Wärme wird indirekt zugeführt.

Ein weiteres Verfahren zur Behandlung von Klärschlamm ist aus der DE 10 2011 112 780 A1 bekannt. Der Schlamm wird zuerst in einer thermischen oder chemisch-thermischen Hydrolyse behandelt. Anschließend erfolgt eine Abtrennung von gelöstem ortho-Phosphat aus dem Schlamm. Danach wird der restliche Schlamm im Faulbehälter anaerob verfault. Die Wärmezufuhr für die thermische Hydrolyse kann dabei indirekt über Wärmetauscher und/oder direkt mittels Dampfinjektion erfolgen. Der Schlamm wird nach der Hydrolyse und vor der Abtrennung von Phosphat über eine Kühlvorrichtung abgekühlt.

Aus der DE 10 2009 014 776 A1 ist ein Verfahren zur thermischen Hydrolyse von organischer Masse bekannt. Die Wärme für die thermische Hydrolyse wird indirekt über Wärmetauscher übertragen bzw. entzogen, also über Heiz- und Kühlelemente. Dabei wird ein Medium zwischen Heizelement und Kühlelement im Kreislauf gefördert. Die für die Hydrolyse erforderliche Wärme wird dabei indirekt auf das Medium übertragen.

Für alle erwähnten bekannten Verfahren ist bei der thermischen Hydrolyse zusätzlich eine Wärmeenergie erforderlich. Dabei ist es häufig auch schon berücksichtigt, dass diese Wärmeenergie aus einem Teil der Mehrgasproduktion aus der Faulung oder aus der Abwärme des in einem Verbrennungsmotor verbrannten Faulgases bezogen wird, also letztlich aus Wärmeenergie, die im Verfahren selbst entsteht. Gleichwohl wäre es vielfach möglich, diese Wärmeenergie auch noch anderweitig zu nutzen und es besteht erhebliches Interesse daran, für die thermische Hydrolyse eingesetzte zusätzliche Wärmeenergie zumindest effektiv einzusetzen.

Dabei ist eine indirekte Wärmeübertragung eigentlich weniger zu bevorzugen, obwohl sie in allen vorgenannten Vorschlägen so vorgenommen wird. Die Wärmeübertragung auf indirektem Wege ist deutlich ungünstiger und weniger effektiv und hat darüber hinaus den Nachteil, dass sie die maximal mögliche Feststoffkonzentration im Klärschlamm stark begrenzt. Würde man die Feststoffkonzentration bei einer indirekten Wärmeübertragung höher wählen, wäre die Wärmeübertragung noch schlechter, da die Viskosität des Schlamms bei ansteigender Feststoffkonzentration zunimmt.

Zur Vermeidung dieser Nachteile ist bereits in der DE 10 2008 013 980 B3 vorgeschlagen worden, bei einem Verfahren zur Klärschlammbehandlung die für die Hydrolyse erforderliche Wärme entweder indirekt mittels Wärmetauscher oder aber auch mittels Dampfinjektion von Wasserdampf direkt zuzuführen. Dieser Vorschlag enthält außerdem bereits den Gedanken, nur den sogenannten Überschussschlamm des Klärschlamms mit einer thermischen Hydrolyse zu behandeln und anschließend im Faulbehälter anaerob zu verfaulen. Der hydrolysierte Überschussschlamm wird also separat verfault.

In einem aus der EP 0 784 504 B1 bekannten Verfahren zur Hydrolyse von organischen Materialien erfolgt ebenfalls eine thermische Hydrolyse von organischem Material wie beispielsweise Abwasserschlamm mittels Wasserdampf. Neben einer indirekten Erwärmung des organischen Materials über Wärmetauscher wird auch ein direkter Prozess in einem Druckbehälter beschrieben, bei dem der Wasserdampf vom Boden her in den Druckbehälter eingeführt wird und die Temperatur anhebt.

Auch in der EP 1 198 424 B1 wird eine direkte Zufuhr von Dampf bei einem Verfahren zur Behandlung von Klärschlamm in einen Hydrolysereaktor vorgeschlagen. Dabei wird das organische Material zunächst auf eine Temperatur von annähernd 100 °C erwärmt, anschließend mit Dampf bei einem Druck von 1.000 hPa bis 4.000 hPa absolut in einem Mischer gemischt und in einen Vorerwärmungstank geleitet, anschließend auf einen Druck von 3.000 hPa bis 10.000 hPa absolut gebracht und in einen Hydrolysereaktor geleitet. Nach der erfolgten Hydrolyse wird der Druck in einem Druckentlastungstank auf 1.000 hPa bis 4.000 hPa entlastet. Bei diesem Druck erfolgt eine Trennung von Dampf und Schlamm, anschließend erfolgt gegebenenfalls ein weiteres Kühlen des Schlamms. Die Wärme wird bei diesem Verfahren für die Vorerwärmung auf ca. 100 °C indirekt über Wärmetauscher und für die weitere Erwärmung auf über 100 °C direkt mittels Dampfinjektion zugeführt. Zur Reduzierung des Wärmebedarfs bzw. Dampfbedarfs wird der Dampf aus dem Druckentlastungstank abgetrennt und entweder zum ersten Wärmetauscher zurückgeführt und/oder im Mischer mit dem Schlamm gemischt.

Diese Vorschläge, die mit einer mit Dampfinjektion arbeitenden Hydrolyse versehen sind, benötigen für die Erzeugung des Dampfs jeweils einen Dampfkessel. Das ist sehr nachteilig, denn das zu verdampfende Wasser muss hohen Reinheitsanforderungen genügen, damit Ablagerungen im Dampfkessel und Beschädigungen des Dampfkessels vermieden werden. Eine derartige Wasserqualität, die diesen Reinheitsanforderungen genügt, ist in der Regel nur über eine zusätzliche Wasseraufbereitung von Trinkwasser oder mittels gut aufbereitetem Brauchwasser zu gewährleisten und führt somit zu zusätzlichen Kosten und Risiken und natürlich auch zu der Problematik eines zusätzlichen Ausfalls der Dampfkessel bei etwa doch eintretenden Beschädigungen. Darüber hinaus verbleibt das zu verdampfende Wasser im Schlamm und muss deshalb laufend bereit gestellt werden.

Trotz der Vorteile, die eine direkte Dampfinjektion in den Schritt der thermischen Hydrolyse bei der Abwasserbehandlung bietet, stoßen diese Vorschläge daher nach wie vor auf praktische Bedenken und sie haben sich nicht im gewünschten Maße durchgesetzt. Unverändert wird mit bewährter herkömmlicher indirekter Wärmeenergiezufuhr zur thermischen Hydrolyse gearbeitet und die oben skizzierten Nachteile in Kauf genommen.

Ein Verfahren zur gleichzeitigen energetischen und stofflichen Verwertung von Abfällen ist aus der DE 10 2008 045 289 A1 bekannt. Darin wird ein metallurgisches Verfahren zur gleichzeitigen energetischen und stofflichen Verwertung von anorganischen und/oder organischen Abfällen durch Erzeugung von energiereichen Gasen bei gleichzeitiger Rückgewinnung von Wertstoffen in einem Verfahrensschritt angewandt. Das bei der Monoverbrennung mit ca. 2000 °C anfallende heizwertreiche Ofengas mit 10,5% H2 und 19% CO kann über eine Nachverbrennung zur Dampferzeugung für eine Hochtemperaturtrocknung genutzt werden.

Es besteht in der Praxis der Wunsch, weitere Vorschläge zur Verbesserung der Abwasserbehandlung zu unterbreiten, die ein effektiveres Arbeiten ermöglichen und/oder weitere Anwendungsfelder erschließen.

Diese Aufgabe wird bei einem gattungsgemäßen Verfahren mittels der vorliegenden Erfindung dadurch gelöst, dass der Klärschlamm nach der Hydrolyse einem Nachentwässerungsaggregat zugeführt wird, dass der entwässerte Klärschlamm aus dem Nachentwässerungsaggregat mit etwa 30 % Trockensubstanz über eine Leitung der Trocknung zugeführt wird, dass die Trocknung eine mit Überdruck im Dampfbereich arbeitende Trocknung ist, und dass zumindest Teile des bei der mit Überdruck im Dampfbereich arbeitenden Trocknung entstehenden Dampfes den Anteilen des Klärschlamms in der thermischen Hydrolyse zugeführt werden.

Bei einer gattungsgemäßen Anordnung wird mittels der vorliegenden Erfindung diese Aufgabe dadurch gelöst, dass ein Nachentwässerungsaggregat vorgesehen ist, das an die Hydrolyseeinrichtung angeschlossen ist. dass, das Nachentwässerungsaggregat über eine Leitung mit dem Trockner verbunden ist, dass der über die Leitung zugeführte Klärschlamm etwa 30 % Trockensubstanz aufweist, dass der Trockner ein mit Überdruck im Dampfbereich arbeitender Trockner ist, dass eine Zufuhreinrichtung für die Zufuhr des im mit Überdruck im Dampfbereich arbeitenden Trockners entstehenden Dampfes zur Hydrolyseeinrichtung vorgesehen ist, und dass die Hydrolyseeinrichtung so aufgebaut ist, dass sie eine Durchmischung des zugeführten Dampfes mit dem Klärschlamm vornimmt.

Erfindungsgemäß wird vorgeschlagen, dass der im herkömmlichen Verfahren auch schon allgemein vorgesehene Schritt einer Trocknung durch eine Dampftrocknung vorgenommen wird. Die bei dieser Dampftrocknung entstehenden Brüden werden dann in die Hydrolysestufe geleitet. Dabei kann der Klärschlamm durch den Brüden aufgeheizt und hydrolysiert werden. Mindestens ein Teil des Brüdens kondensiert dabei und führt so zu einer direkten Erhitzung des Klärschlamms auf die gewünschte Hydrolysetemperatur.

Mit der Dampftrocknung gelangen auch Schlamminhaltsstoffe in den Brüden. Das Kondensat aus der Dampftrocknung enthält somit zusätzliche Inhaltsstoffe, die einen Einfluss auf die Hydrolyse haben. Dieser Einfluss ist deutlich anders, als wenn Wasserdampf ohne derartige Inhaltsstoffe für die vorgesehene thermische Hydrolyse eingesetzt wird, wie dies bei in herkömmlichen Verfahren vorgesehenen Schritten einer Trocknung ohne die erfindungsgemäße Dampftrocknung geschieht.

Dieser gänzlich neue, durch die Erfindung entstehende Einfluss führt dazu, dass der Wirkungsgrad der Hydrolyse aufgrund der mittels Dampftrocknung extrahierten Inhaltsstoffe deutlich verbessert wird. Gegenüber einer Verfaulung von konventionell hydrolysiertem Schlamm wird eine schnellere beziehungsweise eine höhere Gas- beziehungsweise Methanausbeute erzielt. Bei Versuchen hat sich schon herausgestellt, dass diese Verbesserung durchaus etwa 15 % bei einer Fauldauer von 7 Tagen betragen kann.

Außerdem kann der aus der Trocknung ausgeschleuste Dampf, hier also konkret der Brüden mit den erwähnten zusätzlichen Inhaltsstoffen, vorteilhafter Weise auf den für eine Dampfinjektion bei einer thermischen Hydrolyse erforderlichen Druck verdichtet werden. Alternativ bietet sich die Möglichkeit an, die Dampftrocknung bei erhöhtem Druck durchzuführen und eine direkte Dampfinjektion ohne eine zusätzliche Verdichtung vorzunehmen.

Besonders bevorzugt wird die gestellte Aufgabe erfindungsgemäß dadurch gelöst, dass die Trocknung mit Überdruck im Dampfbereich eine Wirbeltrocknung ist.

Es entsteht bei dieser bevorzugten Ausführungsform eine neuartige Kombination aus thermischer Hydrolyse mit einer Wirbelschicht-Dampftrocknung. Der aus der Wirbelschicht-Dampftrocknung ausgeschleuste Dampf wird in den Hydrolysereaktor geleitet. Das Druck- und Temperaturniveau sowie die Menge des Dampfes können erforderlichenfalls über Zusatzbedingungen noch zusätzlich an die jeweils herrschenden Bedingungen der Hydrolyse angepasst werden.

Die oben bereits erwähnte Verbesserung der Hydrolyse durch die andere Zusammensetzung des Brüdens gegenüber herkömmlichem Wasserdampf beträgt in Bezug auf die Faulgasausbeute ca. 15 % oder in Bezug auf das notwendige Volumen des Faulbehälters eine rund 50%ige Reduzierung. Die Nutzung des Brüdens aus den bevorzugt eingesetzten geschlossenen Wirbelschichtverdampfungstrockner bei den entsprechenden Trocknungsbedingungen ist damit besonders vorteilhaft.

Die Zusammensetzung des dampfförmigen Brüdens, die bei einem Trocknungsverfahren im geschlossenen Dampfkreislauf und bei Überdruck erzielt werden kann, zeigt überraschend diese Vorteile. Die Temperatur im Wirbelschichtverdampfungstrockner beträgt ca. 150 °C, wodurch zusätzlich eine Hydrolyse von Inhaltsstoffen des verdampften Wassers während der Trocknung erfolgt. Dies ist eine deutliche Veränderung gegenüber atmosphärischen beziehungsweise nicht im Überdruck betriebenen Verdampfungstrocknern, bei denen eine solche Hydrolyse nicht erfolgt.

Die Wirbelschichtverdampfungstrocknung führt zu einer gezielten Veränderung der Dampfzusammensetzung, die eine verbesserte thermische Hydrolyse für eine erhöhte Energiegewinnung ermöglicht und mit den herkömmlichen Verfahren nicht vergleichbar ist.

Der Wasserdampf wird nicht, wie herkömmlich beschrieben, direkt in eine thermische Hydrolyse, sondern zunächst in die Wirbelschichtverdampfungstrocknung geleitet, um diese dann zusammen mit den aus dem Klärschlamm extrahierten Inhaltsstoffen anschließend der thermischen Hydrolyse zuzuführen. Das erfindungsgemäße Verfahren beinhaltet somit auch eine doppelte Nutzung des Wasserdampfes, dessen Vorteile erst durch die Nutzung einer Wirbelschichtverdampfungstrocknung in dieser Form erzielt werden können.

Von besonderem Vorteil ist es, dass kein Dampferzeuger mehr erforderlich ist. Das bedeutet einen Wegfall von erheblichem apparativen Aufwand. Darüber hinaus wird auch keine Reinwasseraufbereitung für die Dampferzeugung mehr erforderlich. Das bedeutet, dass der Betreiber der Abwasseraufbereitungsanlage sich nicht mehr mit den hohen Voraussetzungen für eine Reinwasseraufbereitung beschäftigen muss. Weder muss er eine solche bereit stellen, noch diese warten, noch ist er gezwungen, die etwaigen Ausfallzeiten aufgrund Wartung und Reparatur in irgendeiner Form von vornherein zu berücksichtigen.

Ein weiterer Vorteil liegt darin, dass keinerlei Betriebswasserverbrauch mehr anfällt. Das spart Kosten und es spart auch das Vorhalten und Betreuen entsprechender Kapazitäten.

Auch ein Wärmetauscher für die Kondensation des ausgeschleusten Dampfes, der bei herkömmlichen Anlagen im Regelfall eingesetzt werden musste, kann ersatzlos entfallen.

Ebenso wird weder ein Vorerwärmungswärmetauscher, noch ein Abkühlungswärmetauscher benötigt. Insgesamt entsteht auch dadurch ein einfacherer Betrieb und weniger Apparatetechnik.

Diese Vorteile entstehen auch bei einem Dampftrockner anderen Typs, allerdings haben sich Wirbelschicht-Dampftrockner besonders bewährt und sie bieten weitere Vorteile. Wirbelschicht-Dampftrocknung in anpassbarer Form ist beispielsweise aus der EP 2 457 649 A1 bekannt. Sie wird dort in Zusammenhang mit der Fluidisierung von insbesondere Zuckerteilchen in der Zuckerindustrie beschrieben, kann aber auch bei entsprechender Anpassung der Parameter zur Trocknung von Klärschlamm eingesetzt werden. Im Pilotmaßstab ist dies bereits erprobt und funktioniert hervorragend. Durch eine Kombination mit der thermischen Hydrolyse ist eine hervorragende Funktionsweise gegeben.

Ein anderes Verfahren zur Kombination einer Wirbelschichttrocknung, hier in Zusammenhang mit einer Vergasung von feuchten Brennstoffen, wird in der DE 10 2009 049 181 A1 beschrieben. Als feuchte Brennstoffe werden dabei bestimmte Fraktionen aus der Aufbereitung von Abfall und Reststoffen mit höheren Zellulosegehalten sowie Biomassen primären und sekundären Aufkommens beschrieben. Um einen Wirbelschichttrockner einsetzen zu können, muss zuvor der flüssige Brennstoff indirekt über Wärmetauscher vorerwärmt werden, weil ein direkter Kontakt des Kondensats zu einer unerwünschten Erhöhung des Feuchtegehalts des Brennstoffes führen würde. Ein Einsatz eines Wirbelschichttrockners bei der Nachbehandlung von Klärschlamm aus Abwässern ist mit einem derartigen bekannten Verfahren weder angedacht noch möglich.

In einer besonders vorteilhaften Ausführungsform der vorliegenden Erfindung kann auf eine indirekte Vorerwärmung des zu hydrolysierenden Klärschlamms durch Wärmetauscher ganz verzichtet werden. Dies gilt insbesondere dann, wenn eine hinreichende Menge an Dampf zur Verfügung steht und dieser nicht anderweitig benötigt wird. Alle sonst in diesem Zusammenhang benötigten Zusatzapparate wie Wärmetauscher, Rohrleitungen und Pumpen können dann entfallen. Die Investitions- und Betriebskosten reduzieren sich dadurch erheblich.

Darüber hinaus ist dieses vorgeschlagene Verfahren auch robuster und betriebstechnisch einfacher zu handhaben. Dies liegt insbesondere daran, dass eine direkte Kondensation des mittels Dampfinjektion eingeführten Dampfes die herkömmlich auftretenden Probleme, wie etwa Biofouling, Scaling, Leckage, sowie Zusatzarbeiten wie etwa eine Reinigung von Wärmetauscherflächen vermeidet.

Besonders vorteilhaft ist auch, dass das erfindungsgemäße Verfahren kein Frischwasser benötigt. Es entfallen also nicht nur wie bereits oben erwähnt die Erfordernisse, einen Dampfkessel oder eine andere Dampferzeugungsanlage separat überhaupt vorrätig zu halten, sondern es ergeben sich auch im Übrigen durch die Einsparung von Wasser betriebliche und Ressourcen schonende Vorteile.

Ein weiterer Vorteil ist, dass neben der gewünschten Hydrolyse des Klärschlamms auch eine Kondensation mindestens eines Teils des Brüdens erfolgt. Durch diese Kondensation wird Verdampfungsenthalpie freigesetzt und ein Großteil der bei der Dampftrocknung zuvor verbrauchten Wärmeenergie zurückgewonnen. Auf diese Weise entstehen darüber hinaus auch noch Energieeinsparungen oder alternativ dazu äquivalente Einsparungen an CO₂.

Der entstehende kondensierte Brüden kann vorteilhafter Weise dann auch gleich in der anaeroben Faulung verbleiben und wird somit integriert weiterbehandelt. Die organischen Inhaltsstoffe des kondensierten Brüdens werden dabei zumindest ebenso teilweise verfault und in zusätzliche Energie umgewandelt.

In einer Reihe von Ausführungsformen ist vorgesehen, dass mit den der thermischen Hydrolyse unterzogenen Anteilen des Klärschlamms anschließend eine Faulung vorgenommen wird.

Hierfür können insbesondere Faulbehälter vorgesehen werden. Faulbehälter und Faulungsstufen sind wie Eingangs beschrieben aus dem Stand der Technik ansich auch bekannt und es wird bevorzugt, eine solche Faulung auch in den erfindungsgemäßen Varianten vorzusehen. Allerdings ist es auch möglich, Ausführungsformen der Erfindung ohne Faulbehälter und ohne eine Faulung im Anschluss an die thermische Hydrolyse auszuführen.

In einer weiteren bevorzugten Ausführungsform ist vorgesehen, dass aus dem bei der Entwässerung zugeführten Klärschlamm eine Phosphorrückgewinnung vorgenommen wird.

Diese Maßnahme hat den Vorteil, auch die Pflanzennährstoffe, die im Klärschlamm enthalten sind, einer sinnvollen und effektiven Nutzung zuzuführen. Diese Pflanzennährstoffe können durch Phosphatfällung und Stickstoffabtrennung aus dem Klärschlamm Wasser zurückgewonnen werden, ebenso aber auch im Rückgewinnungsverfahren aus den Klärschlammaschen, das heißt aus den Rückständen der Verbrennung von Klärschlamm. Des Weiteren ist es auch möglich die in einer Hochtemperatur-Monoverbrennung gewonnene phosphathaltige Schlacke als Dünger zu nutzen.

Aus DE 10 2012 014 357 B3 ist eine solche Ausführungsform bekannt, die eine stoffliche und/oder energetische Verwertung von phosphorhaltigem Klärschlamm mittels Schmelzvergasung in metallurgischen Schachtöfen vorsieht. Dabei werden die in die Gasphase gelangenden Phosphorverbindungen separiert und mittels eines metallurgischen, stofflichen Recyclings nutzbar gemacht.

In weiteren Ausführungsform kann die Wärmeabgabe des unter Druck stehenden Brüdens dahingehend flexibilisiert werden, dass dieser zur Wasseraufbereitung, der Dampfstrippung von Prozesswasser, zur mechanischen Entwässerung, für den Betrieb von Mikroturbinen und der destillativen Aufkonzentration salzhaltiger Wässer eingesetzt wird.

In einer zusätzlichen Ausführungsform können die Energieströme in einer Kläranlage und zwischen mehreren Kläranlagen dahingehend flexibilisiert werden, dass ein lagerfähiges und transportables Speichermedium in Form von getrocknetem Klärschlamm erzeugt wird. Dabei kann der getrocknete Klärschlamm von kleineren Kläranlagen wirtschaftlich transportiert und gemeinsam an einem größerem Kläranlagenstandort verbrannt werden.

Eine Ausführungsform der Erfindung besteht in einer Anordnung zur Abwasserbehandlung, bei der keine Faulbehälter vorgesehen sind. Dabei kann der getrocknete Klärschlamm einer Verbrennungsanlage, insbesondere einer Monoverbrennungsanlage oder eine Abfallverbrennungsanlage, oder einer Schmelzverglasungsanlage zugeführt werden. Die entstehenden heizwertreichen Ofengase können in einer Nachverbrennung zur Dampferzeugung für eine Hochtempteraturtrocknung und/oder Stromerzeugung genutzt werden. Möglich ist auch eine Verwertung in Zementwerken oder in Kohlekraftwerken oder anderen Anlagen. Bei einer Kombination aus Trocknung und Verbrennung ist Strom ein für die Wirtschaftlichkeit besonders maßgebendes Produkt. Diese Ausführungsform führt zu einer Verfahrensumstellung, die letztendlich der Erhöhung der Stromausbeute dient.

Weitere Vorteile der Erfindung werden in den Unteransprüchen sowie in der folgenden Beschreibung der Figuren angegeben.

Im Folgenden werden anhand der Zeichnung einige Ausführungsbeispiele der Erfindung näher beschrieben:
Es zeigen:
- **Figur 1:**: Ein Flussdiagramm für den Verfahrensablauf einer bevorzugten Ausführungsform der Erfindung;
- **Figur 2:**: eine Übersichtsdarstellung über den Aufbau einer ersten Ausführungsform einer erfindungsgemäßen Abwasserbehandlungsanlage;
- **Figur 3:**: eine Übersichtsdarstellung über den Aufbau einer zweiten Ausführungsform einer erfindungsgemäßen Abwasserbehandlungsanlage;
- **Figur 4:**: eine Übersichtsdarstellung über den Aufbau einer dritten Ausführungsform einer erfindungsgemäßen Abwasserbehandlungsanlage;
- **Figur 5:**: eine Übersichtsdarstellung über den Aufbau einer vierten Ausführungsform einer erfindungsgemäßen Abwasserbehandlungsanlage;
- **Figur 6:**: eine Übersichtsdarstellung über den Aufbau einer fünften Ausführungsform einer erfindungsgemäßen Abwasserbehandlungsanlage;
- **Figur 7:**: eine Übersichtsdarstellung über den Aufbau einer sechsten Ausführungsform einer erfindungsgemäßen Abwasserbehandlungsanlage;
- **Figur 8:**: eine Übersichtsdarstellung über den Aufbau einer siebten Ausführungsform einer erfindungsgemäßen Abwasserbehandlungsanlage;
- **Figur 9:**: eine graphische Darstellung des Verlaufs einer Hydrolyse mit Dampf aus Leitungswasser; und
- **Figur 10:**: eine graphische Darstellung ähnlich der Figur 9 einer Hydrolyse mit Brüden aus einer Verdampfungstrocknung.

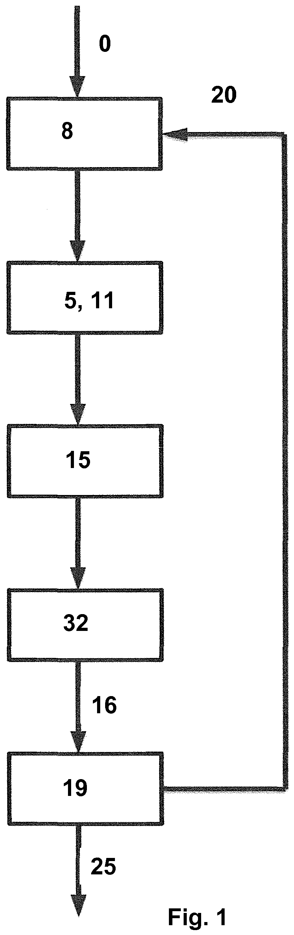

In der **Figur 1** ist zur Verdeutlichung der Erfindung ein Verfahrensablauf in schematisierter und besonders vereinfachter Darstellung wiedergegeben. Es handelt sich dabei um eine Ausführungsform, die auch bereits einige nicht zwingende Verfahrensschritte umfasst, um den ungefähren Ablauf besonders einfach darstellen zu können.

In einem ersten Verfahrensschritt wird Klärschlamm zugeführt, der aus Abwasser gewonnen ist und zuvor etwa einer Vorklärung 0, vielleicht auch einer Belebung und einer Nachklärung unterzogen worden sein kann.

Es kann sich um kommunale Abwässer handeln, ebenso aber auch um solche aus industriellen Anlagen, beispielsweise der Zuckerindustrie.

Der Klärschlamm aus der Vorklärung 0 und etwaigen weiteren Stufen wird dann in Form von Überschussschlamm oder Rohschlamm einer Hydrolyse 8 zugeführt. Dabei findet in dem Hydrolysereaktor eine thermische Hydrolyse statt.

Die thermische Hydrolyse ist ein bewährtes Behandlungsverfahren für Klärschlamm, welcher etwa in Abwasser enthalten ist, und verbessert die Verfaulung und Entwässerung desselben. Die Hydrolysetemperatur variiert dabei von etwa 100 °C bis etwa 200 °C. Die für die Erzielung dieser Hydrolysetemperatur erforderliche Wärmeenergie wird entweder indirekt über Wärmetauscher oder wie in der Ausführungsform der Erfindung direkt mittels Dampf übertragen. Um Wärmeenergie zu sparen, kann der Klärschlamm vor der Hydrolyse eingedickt werden. Auch mit der dargestellten Ausführungsform der Erfindung werden die Nachteile der indirekten Wärmeübertragung mittels Wärmetauscher gegenüber der direkten Wärmeübertragung vermieden. Diese Nachteile bestehen darin, dass bei einer indirekten Wärmeübertragung die Eindickung des Klärschlamms auf maximal ca. 6 % bis 7 % Trockensubstanz aufgrund der zunehmenden Viskosität begrenzt ist. Diese Begrenzung entfällt durch die direkte Wärmeübertragung, weil sie Eindickungsgrade des Klärschlamms auf ca. 10 % bis 15 % Trockensubstanz ermöglicht.

Durch die beschriebene Ausführungsform ist es aber nicht mehr erforderlich, die bisher einer direkten Wärmeübertragung entgegenstehenden zusätzlichen Komponenten und Betriebsstoffe einzusetzen, wie beispielsweise Dampferzeuger und entsprechend aufbereitetes Wasser für den störungsfreien Betrieb der Dampferzeuger. Das bedeutet, dass auch die umfangreichen Sicherheitsvorschriften für den Dampfkesselbetrieb, die bisher einen Einsatz wenig vorteilhaft erscheinen ließen, einfach durch den vollständigen Entfall des Dampfkessels nicht mehr relevant sind.

Es ist also möglich, die verfahrenstechnischen Vorteile der Dampferhitzung in der thermischen Hydrolyse von Klärschlamm zu nutzen und gleichzeitig die bestehenden Nachteile zusätzlicher Komponenten und Betriebsstoffe zu vermeiden.

Der hydrolysierte Schlamm wird einer Faulung 5 beziehungsweise 11 zugeführt und verfault dort. Der dabei entstehende Faulschlamm wird dann einer Entwässerungsstufe 15 zugeführt. Er wird dort beispielsweise mechanisch entwässert. Der auf diese Weise mechanisch entwässerte Schlamm wird in einer Konditionierungsstufe 32 pelletiert oder sonstwie vereinzelt und in Form von Pellets oder Granulat über eine Leitung 16 einem Verdampfungstrockner 19 zugeführt. Bei der Dampftrocknung in dem Verdampfungstrockner 19 entsteht ein getrockneter Klärschlamm, welcher energetisch und stofflich beispielsweise in einer Klärschlamm-Monoverbrennungsanlage verwertet werden kann. Alternativ kann der getrocknete Klärschlamm auch zu Briketts verarbeitet werden, welcher energetisch und stofflich beispielsweise in einer Schmelzanlage verwertet werden kann.

Die Konditionierungsstufe 32 kann (nicht dargestellt) alternativ auch innerhalb des Verdampfungstrockners 19 angeordnet werden. Dadurch kann eine vorteilhafte Beschickung des Verdampfungstrockners 19 erzielt und eine Vermeidung oder Reduzierung von Geruchsemissionen aufgrund der geschlossenen Prozessführung erreicht werden.

Insbesondere entsteht bei der Dampftrocknung im Dampftrockner 19 ein Brüden, welcher über eine Zuführung 20 erfindungsgemäß dem Hydrolysereaktor 8 zugeführt wird.

Diese weiteren Bestandteile neben dem Brüden werden mit einem Transportsystem 25 abgeführt.

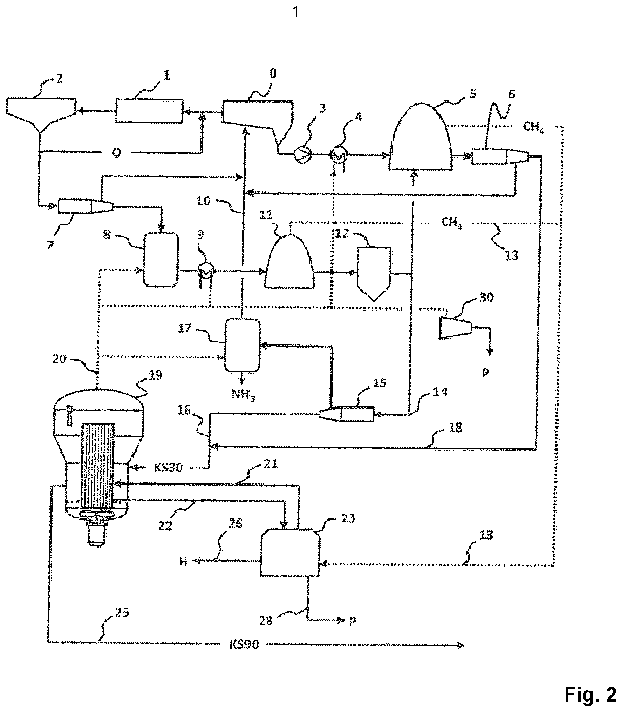

In der **Figur 2** ist eine Übersicht über eine erste Ausführungsform der Erfindung dargestellt. Zentraler Aspekt dabei sind die auch in der Figur 1 schon dargestellten Verfahrensschritte bzw. Vorrichtungselemente. Das Abwasser wird zunächst einer Vorklärung 0, dann einer Belebung 1 und anschließend einer Nachklärung 2 unterzogen. Mittels einer Pumpe 3 und einem hier noch vorhandenen Wärmeübertrager 4 für eine Beheizung wird ein Teil des vorgeklärten Abwassers einem ersten Faulbehälter 5 zugeführt und nach der vollzogenen Faulung an ein Entwässerungsaggregat 6 für Primärschlamm weitergegeben. Das im ersten Faulturm 5 entstehende Methan wird einem Blockheizkraftwerk 23 zugeführt.

Interessanter ist jedoch ein zweiter Weg, den hier nach der Nachklärung 2 der Klärschlamm nimmt. Es handelt sich hierbei um den Überschussschlamm, welcher einem Vorentwässerungsaggregat 7 zugeführt und von dort einem Hydrolysereaktor 8 übergeben wird. Dieser Hydrolysereaktor 8 ist eines der zentralen Elemente der Erfindung.

Angedeutet ist noch ein Weg O, der für rückgeführtes Overplus beziehungsweise Überschuss steht und den nicht dem Vorentwässerungsaggregat 7 zugeführten Teil des Überschlussschlamms zurückführt zur Belebung 1.

Man sieht insbesondere eine zum Hydrolysereaktor 8 führende gestrichelte Zuführung 20, die später noch weiter erörtert wird.

Aus dem Hydrolysereaktor 8 wird nach Durchlaufen eines Wärmeübertragers 9 für die Kühlung der Klärschlamm einem zweiten Faulturm 11 zugeführt. In diesem wird der hydrolysierte Klärschlamm verfault. Das entstehende Methan wird über eine weitere Leitung 13, die gestrichelt dargestellt ist, ebenfalls dem Blockheizkraftwerk 23 zugeführt.

Der verfaulte Klärschlamm aus dem Faulturm 11 geht dann weiter in eine MAP-Anlage 12 (Magnesium-Ammonium-Phosphat-Anlage) und von dort über eine Leitung 14 zu einem Nachentwässerungsaggregat 15 für den Überschussschlamm.

Das Zentrat des hydrolysierten Überschussschlamms wird aus dem Nachentwässerungsaggregat 15 über eine Leitung zur Strippanlage 17 geführt und dort weiterbehandelt. Der entwässerte Schlamm aus dem Nachentwässerungsaggregat 15 wird über eine Leitung 16 in einem Trockner 19 zugeführt. Zu diesem Zeitpunkt handelt es sich bereits um trockenen Klärschlamm mit etwa 30 % Trockensubstanz.

Der Trockner 19 ist ein Dampftrockner oder Verdampfungstrockner, insbesondere ein Wirbelschichttrockner.

Der in ihm entstehende Dampf wird abgezogen und insbesondere, wie oben bereits erwähnt, dazu genutzt, dem Hydrolysereaktor 8 und dem darin befindlichen Klärschlamm direkt zugeführt zu werden. Der Dampf, der sogenannte Brüden, in der Zuführung 20 steht dabei unter Druck bzw. wird entsprechend verdichtet und besitzt eine hohe Temperatur, die direkt zur thermischen Hydrolyse im Hydrolysereaktor 8 genutzt werden kann. Der Dampf aus der Zuführung 20 kondensiert dabei in den Hydrolysereaktor 8 und die in ihm enthaltenen Substanzen können bei den anschließend folgenden Schritten, wie etwa der Verfaulung im Faulturm 11 mit verwertet werden. Es bleiben also nahezu keine unverwertbaren Reste.

Teile des Dampfes bzw. Brüdens in der Zuführung 20 können auch für andere Zwecke genutzt werden, etwa durch eine Zuführung zum Wärmeübertrager 4 oder zum Wärmeübertrager 9, wo sie ebenfalls zur Übertragung der in ihm enthaltenen Energie genutzt werden.

Ebenso kann ein Teil des Brüdens auch einem Stripper 17 zugeführt werden. Der Stripper 17 enthält darüber hinaus die ammoniakhaltigen Bestandteile aus dem Nachentwässerungsaggregat 15 und gibt nach dem Strippen Ammoniak ab, welches als Wertstoff gesammelt werden kann.

Auch der mechanisch entwässerte Schlamm aus dem ersten Entwässerungsaggregat 6 für Primärschlamm kann dem Verdampfungstrockner 19 zugeführt werden, was hier durch eine weitere Zuleitung 18 symbolisiert wird.

Das Blockheizkraftwerk 23 kann mit seiner Abwärme über eine Leitung 21 dazu genutzt werden, dem Verdampfungstrockner 19 einen Teil der dort benötigten Energie zur Verfügung zu stellen. Umgekehrt kann der Verdampfungstrockner 19 die bei ihm entstehende überschüssige Menge an Thermalöl oder Heizdampf über eine Leitung 22 dem Blockheizkraftwerk 23 zuführen. Ergänzend oder alternativ kann der Verdampfungstrockner 19 einen Teil des Brüdens an eine Mikro- oder Kleinturbine 30 zur Stromerzeugung abgeben. Diese abgegebene Energie oder Leistung P kann dem Verfahren entnommen oder auch an anderer Stelle sinnvoll wieder zurückgeführt und genutzt werden.

Das Faulgas aus den beiden Faulbehältern 5 und 11 wird über eine Leitung 13 dem Blockheizkraftwerk 23 zugeführt.

Das Blockheizkraftwerk 23 gibt außerdem zusätzliche Abwärme 26 zur weiteren Verwendung an anderer Stelle des Verfahrens oder auch zur Nutzung außerhalb des Verfahrens. Dies ist durch das Bezugszeichen H angedeutet. Ferner wird elektrische Leistung P über eine Leitung 28 abgegeben.

Schließlich verlassen den Dampftrockner 19 die in ihm getrockneten Substanzen als trockener Klärschlamm mit 90 % Trockensubstanz über ein Transportsystem 25.

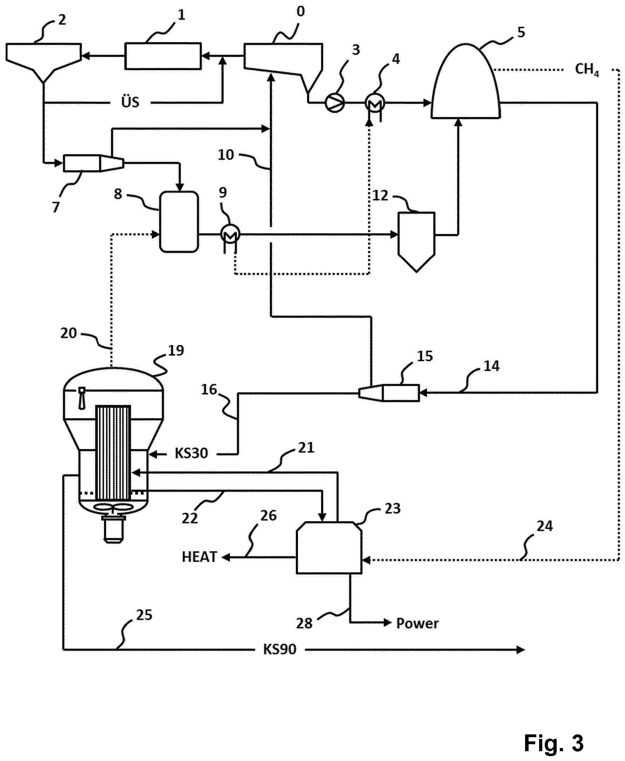

In einer in der **Figur 3** dargestellten zweiten Ausführungsform werden einige Modifizierungen an der ersten Ausführungsform vorgenommen. So findet hier eine gemeinsame Faulung von Überschussschlamm und Primärschlamm statt, so dass der zweite Faulturm 11 und die Strippung 17 entfallen. Dafür gibt es aber eine getrennte Hydrolyse 8 und MAP-Fällung 12 des Überschussschlammes.

Auch in dieser Ausführungsform ist ein Wirbelschichttrockner als Dampftrockner 19 vorgesehen. Dadurch wird eine Nutzbarkeit des Brüden über die Zuführung 20 in der Hydrolyse 8 möglich.

Zu den Vorteilen dieser Ausführungsform zählen die Produktion von Braunkohle-Ersatzbrennstoff in Form von Klärschlamm mit einem Trockensubstanzgehalt von 90 % an Stelle der herkömmlichen 30 % ohne den Einsatz zusätzlicher fossiler Energie und die Nutzung der Abwärme des Blockheizkraftwerks 23 im Trockner 19 mittels Thermalöl 22 ähnlich wie in der ersten Ausführungsform.

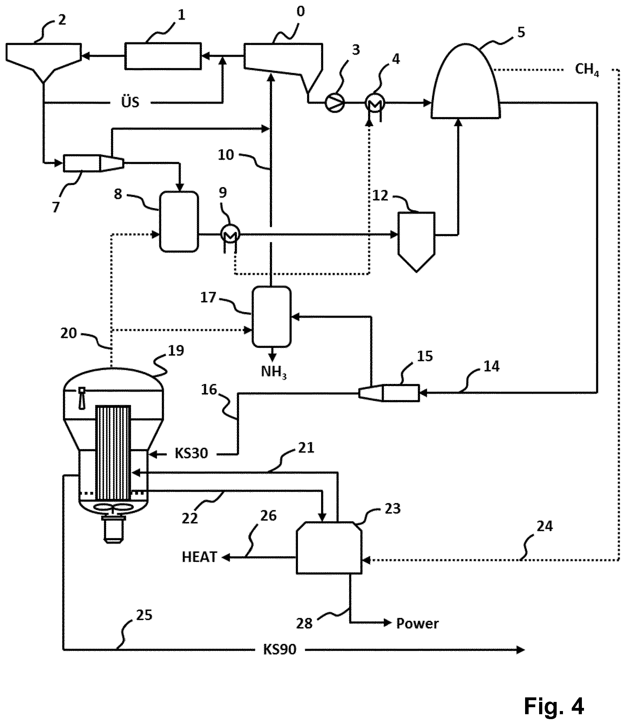

In der **Figur 4** wird eine dritte Ausführungsform dargestellt. Hier ist wiederum eine Strippung 17 hinzugekommen. Dadurch kann der Brüden aus dem Wirbelschichttrockner beziehungsweise Dampftrockner 19 über die Zuführung 20 zusätzlich in der Strippung 17 genutzt werden.

Die vorgesehene Strippung 17 ist nicht nur eine Prozesswasserbehandlung, bei der Schlammwasser aus einer Entwässerungsstufe behandelt wird, sondern auch gleichzeitig eine Aufbereitung des Brüdenkondensats. Dadurch entstehen Vorteile gegenüber anderen Trocknungsverfahren, bei denen eine zusätzliche Kondensataufbereitung erforderlich wird.

Dies berücksichtigt auch, dass der Brüden große Teile Ammonium enthält. Dies gilt auch für weitere, im Folgenden oder oben stehende Ausführungsformen.

Zusätzlich zur zweiten Ausführungsform entsteht eine weitere Wärmesenke für den Trockner 19 und die Produktion eines weiteren Wertstoffes in Form des Ammoniak-Starkwassers NH₃.

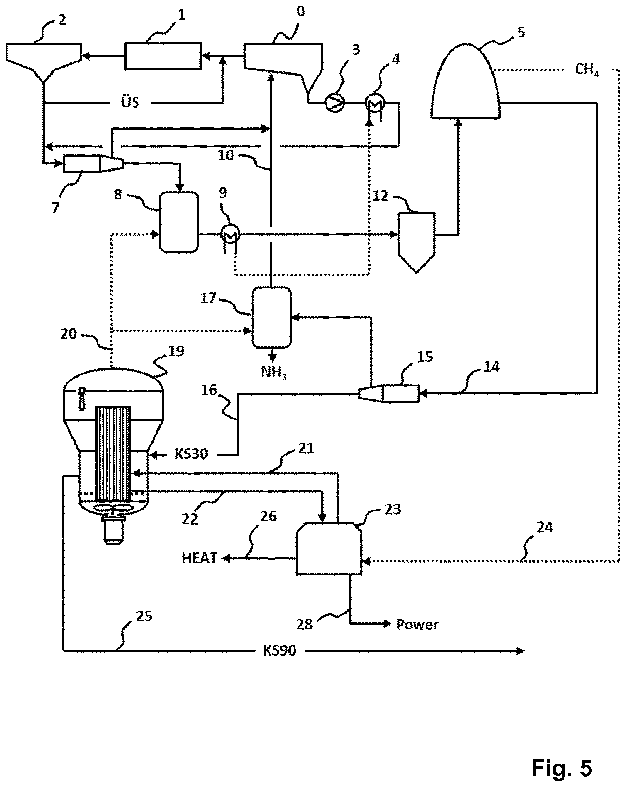

In der **Figur 5** wird eine vierte Ausführungsform wiedergegeben. Anders als in der zweiten Ausführungsform findet hier eine gemeinsame Vorentwässerung 7, Hydrolyse 8, MAP-Fällung 12, Faulung 5, Nachentwässerung 15 und Strippung 17 des Ablaufes aus der Nachentwässerung 15 statt.

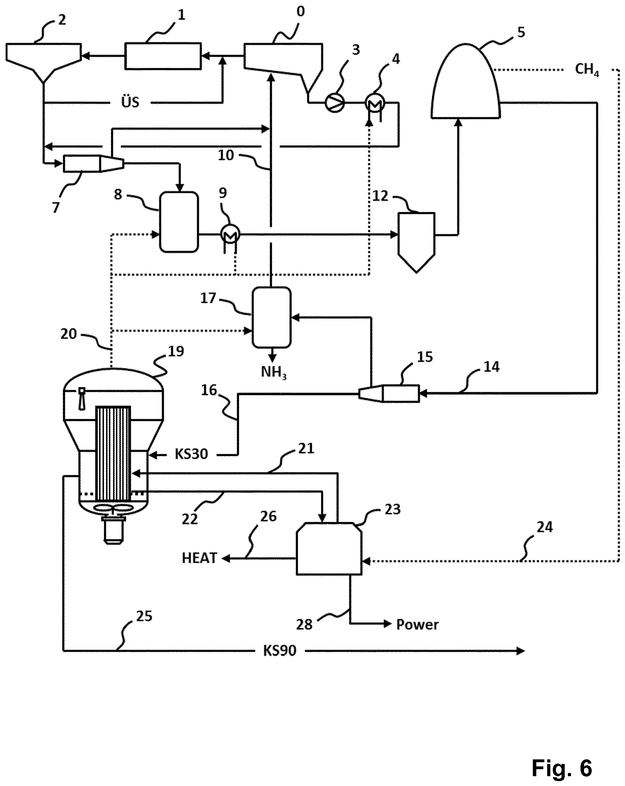

In der **Figur 6** wird eine fünfte Ausführungsform dargestellt. Zusätzlich zur vierten Ausführungsform findet eine Anwärmung des Primär- oder Rohschlammes durch überschüssigen Brüden aus der Trocknung 19 statt, die mittels der Zuführung 20 zugeführt wird.

Als Vorteil ist insbesondere eine deutliche Verbesserung der Entwässerbarkeit und auch kleine Mengenströme zu verzeichnen.

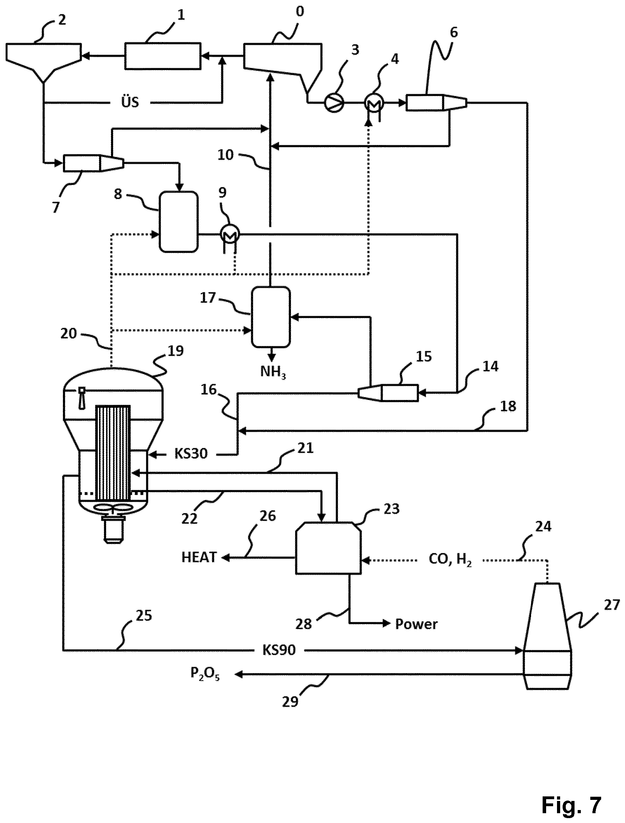

In der **Figur 7** sieht man eine sechste Ausführungsform der Erfindung. Hier handelt es sich um eine deutlich reduzierte und damit kostengünstige Vorgehensweise, die allerdings dafür eine andere zusätzliche Vorgehensweise in den Mittelpunkt stellt. Die MAP-Fällung 12 kann dabei vor oder nach der Entwässerung 15 erfolgen. In dieser Ausführungsform wird vollständig auf Faulbehälter 5, 11 und die Produktion von Biogas beziehungsweise Verbrennungsgas nebst der zugehörigen Leitung 24 verzichtet.

Stattdessen findet eine Monoverbrennung 27 mittels Schmelzvergasung in einem metallurgischen Schachtofen bei 2000 °C zur Produktion phosphorreicher Schlacke (16,4% P₂O₅) als weiteren Wertstoff 29 statt. Es kann auf diese Weise bioverfügbarer Phosphordünger P₂O₅ gewonnen werden, welcher von Schwermetallen und Uran frei ist. Es erfolgt eine Nachverbrennung des heizwertreichen Ofengases zur Erzeugung von elektrischer Energie und Wärme. Dieses ist auch ein Vorteil gegenüber den Ausführungsformen aus den Figuren 2 bis 6, denn es kann ein weiterer begehrter Wertstoff gewonnen werden, wie dies auch in den zukünftig zu erwartenden Gesetzgebungsverfahren angestrebt wird.

Es wird kein Klärschlamm produziert, sondern es wird Energie und Wärme gewonnen, was zu zu verringerten Transportkosten führt. Der Klärschlamm wird am Standort der Abwasserbehandlungsanlage verbrannt und dient somit als Wärme und Energiequelle für die Trocknung und den gesamten Abwasserbehandlungsprozess. Darüber hinaus kann er auch als Wärme- und Energiequelle für externe Verbraucher von Elektro- und Wärmeenergie genutzt werden. Bei der Verbrennung wird mehr Energie produziert, als in der Abwasseranlage verbraucht werden kann.

Zusätzliche Wärme für Fernwärme, Eindampfung oder Beheizung wird produziert und es entsteht eine stark vereinfachte Prozessführung mit vermindertem Einsatz von Fällungshilfsmitteln, wie beispielsweise Polymeren.

Da die Faulbehälter entfallen, reduzieren sich trotz der zusätzlichen Möglichkeiten die Investitionskosten.

Der im Abwasser enthaltene Kohlenstoff kann durch Verbrennung ohne vorherige Produktion von CO₂ in der Faulung vollständig genutzt werden.

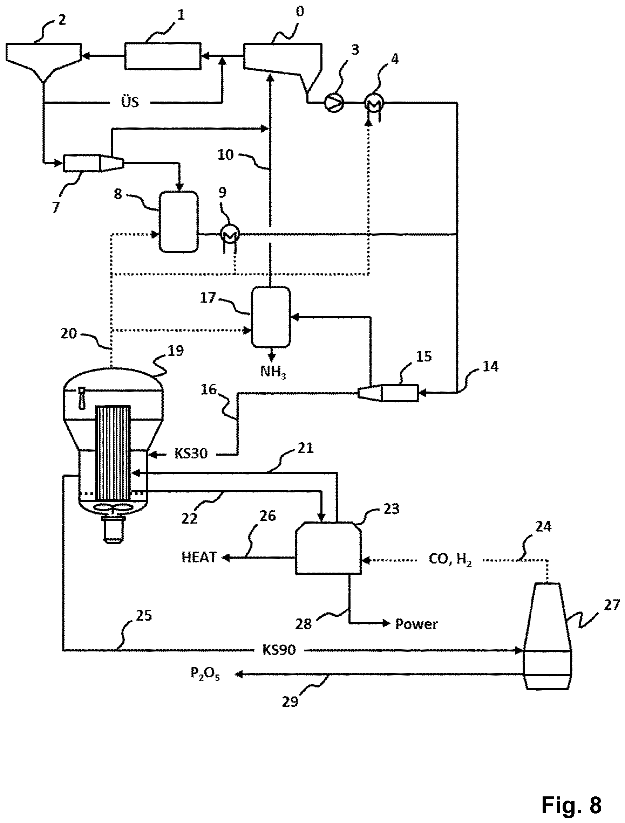

In der **Figur 8** wird schließlich eine siebente Ausführungsform dargestellt, diese unterscheidet sich von der sechsten Ausführungsform durch den Wegfall einer getrennten Entwässerung 6.

Die zusätzlich produzierte Wärme wird einer destillativen Wasseraufbereitungsanlage 31 zugeführt. Dort wird aufbereitetes Wasser W abgegeben.

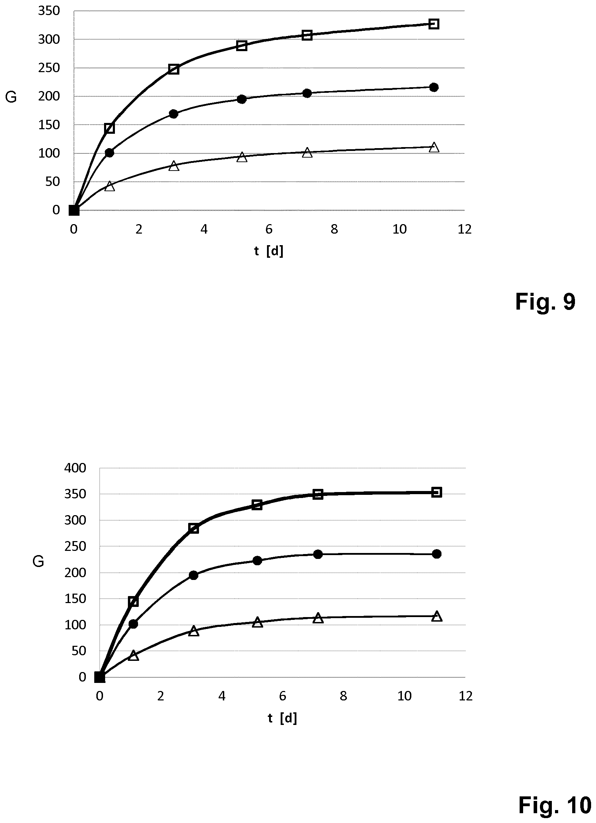

In der **Figur 9** wird ein Versuchsergebnis schematisch dargestellt. Nach rechts ist die Zeit t in Tagen d aufgetragen, nach oben der Gasertrag G in Normliter pro Kilogramm organischer Trockenrückstand, abgekürzt NL/kg oTR. Dargestellt ist ein zeitlicher Verlauf des Gasertrags G von hydrolysiertem Schlamm bei einer Hydrolyse mit Dampf aus Leitungswasser, also nicht nach dem erfindungsgemäßen Vorgehen. Drei Kurven sind aufgetragen, nämlich als obere Kurve der Biogasertrag, als mittlere Kurve der Methanertrag und als untere Kurve der Kohlendioxidertrag, jeweils in der gleichen Größe.

Zum Vergleich ist in der **Figur 10** in sehr ähnlicher Form der zeitliche Verlauf des Gasertrags von hydrolysiertem Schlamm bei einer Hydrolyse mit Brüden aus Verdampfungstrocknung bei einem erfindungsgemäßen Vorgehen dargestellt.

Auch hier ist nach rechts die Zeit t in Tagen d und nach oben der Gasertrag G in Normliter pro Kilogramm organischer Trockenrückstand, abgekürzt NL/kg oTR aufgetragen. Als oberste Kurve ist der Biogasertrag, als mittlere Kurve der Methanertrag und als untere Kurve der Kohlendioxidertrag dargestellt.

Die verschiedenen Kurven in den Figuren 9 und 10 beziehen sich auf einen Vergleichsversuch mit einem Überschussschlamm aus einer kommunalen Kläranlage. Bei diesen Vergleichsversuchen sind sämtliche Prozessbedingungen gleich gewählt worden, also unter anderem die Temperatur, die Hydrolysedauer, die Schlammprobeneigenschaft, die Kondensatmenge beziehungsweise die Wasserdampfmenge. Zur Hydrolyse wurde einer Schlammteilprobe Kondensat/Brüden aus der Dampftrocknung und einer anderen Schlammteilprobe sauberes Leitungswasser beziehungsweise Dampf zugegeben. Mit den hydrolysierten Schlammteilproben erfolgte jeweils eine standardmäßige Verfaulung in Batch-Vergärungsversuchen gemäß der dafür einschlägigen Richtlinie mittels einer Dreifachbestimmung.

Der Vergleich der Ergebnisse in den Figuren 9 und 10 zeigt nun anhand der gemessenen spezifischen Gas- und Methanproduktion, dass die mit Brüden hydrolysierte Schlammprobe in der Figur 10 wesentlich schneller mehr Gas beziehungsweise mehr Methan liefert. Bei einer Fauldauer von etwa 7 Tagen entstehen zum Beispiel ca. 15 % mehr Gas und Methan. Die herkömmliche hydrolysierte Schlammprobe mit Dampf aus Leitungswasser benötigt für die gleiche Gasmenge ca. 5 bis 7 Tage länger, das heißt für eine Verfaulung von mit Brüden hydrolysiertem Schlamm kann der Faulbehälter im vorliegenden Beispiel ca. 40 bis 50 % kleiner ausgelegt werden. Dieses sind erhebliche wirtschaftliche Vorteile, die den Fachmann überraschen.

Weitere Analysen zur Freisetzung von gelösten organischen Verbindungen bestätigen die oben genannten Ergebnisse. So zeigt sich beispielsweise anhand von Hydrolysatproben, dass die Hydrolyse mit Brüden zu einem ca. 9 % höheren Aufschlussgrad führt.

### Bezugszeichenliste

0. Vorklärung
1. Belebung
2. Nachklärung
3. Pumpe
4. Wärmeübertrager Beheizung
5. Faulbehälter
6. Entwässerungsaggregat Primärschlamm
7. Vorentwässerungsaggregat Überschussschlamm
8. Hydrolysereaktor
9. Wärmeübertrager Kühlung
10. Leitung (Rückbelastung der organischen Abwasserbehandlung)
11. Faulbehälter
12. MAP-Anlage
13. Leitung (Faulgas CH₄)
14. Leitung (hydrolysierter Faulschlamm oder Rohschlamm)
15. Entwässerungsstufe
16. Leitung (Zentrat hydrolysierter Überschussschlamm)
17. Strippung
18. Leitung (Zentrat Primärschlamm)
19. Verdampfungstrockner
20. Zuführung
21. Leitung (Abwärme BHKW)
22. Leitung (Thermalöl / Heizdampf)
23. Blockheizkraftwerk (BHKW)
24. Leitung (Verbrennungsgas)
25. Transportsystem (KS 90)
26. Zusätzliche Abwärme BHKW
27. Monoverbrennung
28. Strom
29. Transportsystem (Phosphorschlacke)
30. Mikro- oder Kleinturbine
31. destillative Wasseraufbereitungsanlage
32. Konditionierungsstufe
O, ÜS Überschuss
H Abwärme
P Leistung, insbesondere elektrische Leistung (Stromerzeugung)
W Wasser
G Gasertrag in Normliter pro Kilogramm organischer Trockenrückstand, auch NL/kg o TR
d Tage
t Zeit
KS30 = trockener Klärschlamm mit etwa 30 % Trockensubstanzgehalt
KS90 = trockener Klärschlamm mit etwa 90 % Trockensubstanzgehalt
P₂O₅ = Phosphordünger
CO, H₂ = Verbrennungsgas
CH₄ = Methan
NH₃ = Ammoniak
□ Biogasertrag
• Methanertrag
Δ Kohlendioxidertrag

## Patentansprüche

1. Verfahren zur Abwasserbehandlung,
bei dem zumindest Anteile des im Abwasser (0) enthaltenen Klärschlamms einer Hydrolyse (8) unterzogen werden,
bei dem die Hydrolyse (8) als thermische Hydrolyse durchgeführt wird, bei dem nach dem Schritt der Hydrolyse (8) eine Trocknung (19) erfolgt,
**dadurch gekennzeichnet,**
**dass** der Klärschlamm nach der Hydrolyse (8) einem Nachentwässerungsaggregat (15) zugeführt wird,
**dass** der entwässerte Klärschlamm aus dem Nachentwässerungsaggregat (15) mit etwa 30 % Trockensubstanz über eine Leitung (16) der Trocknung zugeführt wird,
**dass** die Trocknung (19) eine mit Überdruck im Dampfbereich arbeitende Trocknung ist, und
**dass** zumindest Teile des bei der mit Überdruck im Dampfbereich arbeitenden Trocknung (19) entstehenden Dampfes den Anteilen des Klärschlamms in der thermischen Hydrolyse (8) zugeführt (20) werden.

2. Verfahren zur Abwasserbehandlung nach Anspruch 1,
**dadurch gekennzeichnet,**
**dass** die Trocknung (19) mit Überdruck im Dampfbereich eine Wirbelschichttrocknung ist, und
**dass** bei der Trocknung (19) durch die Wirbelschichttrocknung entstehende Inhaltsstoffe mit dem Dampf den Anteilen des Klärschlamms in der thermischen Hydrolyse (8) zugeführt werden.

3. Verfahren zur Abwasserbehandlung nach Anspruch 1 oder 2,
**dadurch gekennzeichnet,**
**dass** mit den der thermischen Hydrolyse (8) unterzogenen Anteilen des Klärschlamms anschließend eine Faulung (5,11) vorgenommen wird.

4. Verfahren zur Abwasserbehandlung nach Anspruch 3,
**dadurch gekennzeichnet,**
**dass** zwischen dem Schritt der Faulung (5,11) und dem der Trocknung (19) im Nachentwässerungsaggregat (15) eine mechanische Entwässerung des der Faulung unterzogenen Klärschlamms erfolgt.

5. Verfahren zur Abwasserbehandlung nach einem der Ansprüche 3 oder 4, **dadurch gekennzeichnet,**
**dass** eine getrennte Faulung (5,11) von einerseits hydrolysiertem Klärschlamm und andererseits Klärschlamm aus dem Abwasser vorgenommen wird.

6. Verfahren zur Abwasserbehandlung nach einem der Ansprüche 1 oder 2, **dadurch gekennzeichnet,**
**dass** eine Abwasserbehandlung ohne Faulung (5,11) vorgesehen ist, und
**dass** der getrocknete Klärschlamm einer Monoverbrennung zugeführt wird und die entstehenden heizwertreichen Ofengase in einer Nachverbrennung zur Dampferzeugung für eine Hochtemperaturtrocknung genutzt werden.

7. Verfahren zur Abwasserbehandlung nach einem der Ansprüche 3 bis 5,
**dadurch gekennzeichnet,**
**dass** ein Teil des bei der Trocknung (19) entstehenden Dampfes für eine Dampfstrippung von Ammoniak aus dem abgetrennten Wasser des hydrolysierten und verfaulten Klärschlamms eingesetzt wird.

8. Verfahren zur Abwasserbehandlung nach einem der vorhergehenden Ansprüche,
**dadurch gekennzeichnet,**
**dass** ein Teil des bei der Trocknung (19) entstehenden Dampfes zur mechanischen Klärschlammentwässerung und/oder für den Betrieb von Mikro- oder Kleinturbinen und/oder zur Aufkonzentration salzhaltiger Wässer eingesetzt wird.

9. Verfahren zur Abwasserbehandlung nach einem der vorstehenden Ansprüche,
**dadurch gekennzeichnet,**
**dass** aus dem bei der Entwässerung abgezogenen Schlammwasser oder dem der Entwässerung zugeführten Klärschlamm eine Phosphorrückgewinnung vorgenommen wird.

10. Anordnung zur Abwasserbehandlung,
mit einer Hydrolyseeinrichtung (8) zur Hydrolysebehandlung von Klärschlamm, und
mit einem Trockner (19) zur Trocknung von Klärschlamm,
**dadurch gekennzeichnet,**
**dass,** ein Nachentwässerungsaggregat (15) vorgesehen ist, das an die Hydrolyseeinrichtung (8) angeschlossen ist.
**dass,** das Nachentwässerungsaggregat (15) über eine Leitung (16) mit dem Trockner (19) verbunden ist,
**dass** der über die Leitung (16) zugeführte Klärschlamm etwa 30 % Trockensubstanz aufweist,
**dass** der Trockner (19) ein mit Überdruck im Dampfbereich arbeitender Trockner ist,
**dass** eine Zufuhreinrichtung (20) für die Zufuhr des im mit Überdruck im Dampfbereich arbeitenden Trockners (19) entstehenden Dampfes zur Hydrolyseeinrichtung (8) vorgesehen ist, und
**dass** die Hydrolyseeinrichtung (8) so aufgebaut ist, dass sie eine Durchmischung des zugeführten Dampfes mit dem Klärschlamm vornimmt.

11. Anordnung zur Abwasserbehandlung nach Anspruch 10,
**dadurch gekennzeichnet,**
**dass** der Trockner (19) ein Wirbelschichttrockner ist, und
**dass** bei der Trocknung (19) durch die Wirbelschichttrocknung entstehende Inhaltsstoffe mit dem Dampf den Anteilen des Klärschlamms in der thermischen Hydrolyse (8) zugeführt werden.

12. Anordnung zur Abwasserbehandlung nach Anspruch 10 oder 11,
**dadurch gekennzeichnet,**
**dass** mindestens ein Faulbehälter (5, 11), beispielsweise ein Faulturm vorgesehen ist, welcher an die Hydrolyseeinrichtung (8) mittelbar oder unmittelbar angeschlossen ist.

13. Anordnung zur Abwasserbehandlung nach Anspruch 12,
**dadurch gekennzeichnet,**
**dass** das Nachentwässerungsaggregat (15), mit dem oder den Faulbehältern (5, 11) mittelbar oder unmittelbar verbunden ist.

14. Anordnung zur Abwasserbehandlung nach einem der Ansprüche 12 oder 13, **dadurch gekennzeichnet,**
**dass** mindestens zwei Faulbehälter (5,11) vorgesehen sind, von denen ein Faulbehälter (5) für den Überschussschlamm aus der Hydrolyseeinrichtung (8) und ein anderer Faulbehälter (11) für Primärschlamm des im Abwasser (0) enthaltenen Klärschlamms vorgesehen sind.

15. Anordnung zur Abwasserbehandlung nach einem der Ansprüche 10 oder 11, **dadurch gekennzeichnet,**
**dass** eine Abwasserbehandlung ohne Faulbehälter (5,11) vorgesehen ist, und **dass** der getrocknete Klärschlamm einer Verbrennungsanlage, insbesondere einer Monoverbrennungsanlage oder einer Abfallverbrennungsanlage, oder einer Schmelzverglasungsanlage zugeführt wird und die entstehenden heizwertreichen Ofengase in einer Nachverbrennung zur Dampferzeugung für eine Hochtemperaturtrocknung und/oder Stromerzeugung genutzt werden.

16. Anordnung nach einem der Ansprüche 10 bis 15,
**dadurch gekennzeichnet,**
**dass** eine Strippung (17) von Ammoniak vorgesehen ist, welche an den Trockner (19) angeschlossen ist.

17. Anordnung zur Abwasserbehandlung nach einem der Ansprüche 10 bis 16, **dadurch gekennzeichnet,**
**dass** eine Phosphorrückgewinnungsstufe vorgesehen ist.

## Claims

1. A method for wastewater treatment,
in which at least portions of the sewage sludge contained in the wastewater (0) are subjected to a hydrolysis (8),
in which the hydrolysis (8) is carried out as a thermal hydrolysis,
in which, after the step of the hydrolysis (8), a drying process (19) takes place,
**characterised in that**
the sewage sludge is fed after the hydrolysis (8) to a post-dewatering assembly (15),
**in that** the dewatered sewage sludge is fed from the post-dewatering assembly (15) with approximately 30% dry substance to the drying process by means of a conduit (16),
**in that** the drying process (19) is a drying process operating with a positive pressure in the steam range, and
**in that** at least parts of the steam created in the drying process (19) operating with positive pressure in the steam range are fed (20) to the portions of the sewage sludge in the thermal hydrolysis (8).

2. .A method for wastewater treatment in accordance with claim 1, **characterised in that**
the drying process (19) is a fluidised bed drying process with positive pressure in the steam range, and
**in that,** during the drying process (19), substances created by the fluidised bed drying process are fed with the steam to the portions of the sewage sludge in the thermal hydrolysis (8).

3. . A method for wastewater treatment in accordance with claim 1 or 2, **characterised in that**
a digestion (5, 11) is subsequently carried out with the portions of the sewage sludge subjected to the thermal hydrolysis (8).

4. . A method for wastewater treatment in accordance with claim 3, **characterised in that**
a mechanical dewatering of the sewage sludge subjected to the digestion takes place between the step of digestion (5, 11) and that of the drying process (19) in the post-dewatering assembly (15).

5. . A method for wastewater treatment in accordance with claims 3 or 4, **characterised in that** there is performed a separate digestion (5, 11) of, on the one hand, hydrolysed sewage sludge and, on the other hand, sewage sludge from the wastewater.

6. . A method for wastewater treatment in accordance with claims 1 or 2, **characterised in that**
a wastewater treatment without digestion (5, 11) is provided, and
**in that** the dried sewage sludge is fed to a monoincineration and the resultant furnace gases of high heat value are utilised in a post-incineration for steam generation for a high-temperature drying process.

7. . A method for wastewater treatment in accordance with claims 3 to 5, **characterised in that**
a part of the steam created during the drying process (19) is employed for a steam stripping of ammonia from the separated water of the hydrolysed and digested sewage sludge.

8. . A method for wastewater treatment in accordance with the preceding claims,
**characterised in that**
a part of the steam created during the drying process (19) is employed for mechanical sewage sludge dewatering and/or for operation of microturbines or small turbines and/or for enrichment of salt-containing water.

9. . A method for wastewater treatment in accordance with the preceding claims,
**characterised in that**
a phosphorus recovery process is performed from the sludge water removed during the dewatering or from the sewage sludge fed to the dewatering.

10. . An arrangement for wastewater treatment,
comprising a hydrolysis device (8) for hydrolytic treatment of sewage sludge, and
comprising a dryer (19) for drying sewage sludge,
**characterised in that**
a post-dewatering assembly (15) is provided which is attached to the hydrolysis device (8),
**in that** the post-dewatering assembly (15) is connected to the dryer (19) by means of a conduit (16),
**in that** the sewage sludge fed by means of the conduit (16) contains approximately 30% dry substance,
**in that** the dryer (19) is a dryer operating with positive pressure in the steam range,
**in that** there is provided a feed device (20) for feeding the steam, which is created in the dryer (19) operating with positive pressure in the steam range, to the hydrolysis device (8), and
**in that** the hydrolysis device (8) is configured such that it mixes the fed steam together with the sewage sludge.

11. . An arrangement for wastewater treatment in accordance with claim 10, **characterised in that** the dryer (19) is a fluidised bed dryer, and
**in that,** during the drying process (19), substances created by the fluidised bed drying are fed with the steam to the portions of the sewage sludge in the thermal hydrolysis (8).

12. . An arrangement for wastewater treatment in accordance with claim 10 or 11,
**characterised in that**
there is provided at least one digestion tank (5, 11), for example a digestion tower, which is attached indirectly or directly to the hydrolysis device (8).

13. . An arrangement for wastewater treatment in accordance with claim 12, **characterised in that**
the post-dewatering assembly (15) is connected indirectly or directly to the digestion tank(s) (5, 11).

14. . An arrangement for wastewater treatment in accordance with claims 12 or 13,
**characterised in that**
at least two digestion tanks (5, 11) are provided, of which one digestion tank (5) is provided for the excess sludge from the hydrolysis device (8) and another digestion tank (11) is provided for primary sludge of the sewage sludge contained in the wastewater (0).

15. . An arrangement for wastewater treatment in accordance with claims 10 or 11,
**characterised in that** a wastewater treatment without a digestion tank (5, 11) is provided, and
**in that** the dried sewage sludge is fed to an incineration facility, in particular a monoincineration facility or a waste incineration facility, or a melt vitrification facility and the resultant furnace gases of high heat value are utilised in a post-incineration for steam generation for a high-temperature drying and/or electrical power generation.

16. . An arrangement in accordance with claims 10 to 15,
**characterised in that**
a stripping unit (17) for stripping ammonia is provided and is attached to the dryer (19).

17. . An arrangement for wastewater treatment in accordance with claims 10 to 16,
**characterised in that**
a phosphorus recovery stage is provided.

## Revendications

1. Procédé de traitement des eaux usées,
où au moins des fractions des boues d'épuration contenues dans les eaux usées (0) sont soumises à une hydrolyse (8),
où l'hydrolyse (8) est mise en œuvre en tant qu'hydrolyse thermique,
où un séchage (19) est effectué après l'étape de l'hydrolyse (8),
**caractérisé en ce**
**que** les boues d'épuration sont amenées après l'hydrolyse (8) à un groupe de déshydratation ultérieure (15),
**que** les boues d'épuration déshydratées provenant du groupe de déshydratation ultérieure (15) sont amenées au séchage par l'intermédiaire d'un conduit (16) avec environ 30 % de substance sèche,
**que** le séchage (19) est un séchage fonctionnant dans la zone à vapeur en surpression, et
**qu'**au moins des parties de la vapeur se formant lors du séchage (19) fonctionnant dans la zone à vapeur en surpression sont amenées (20) aux fractions des boues d'épuration dans l'hydrolyse (8) thermique.

2. Procédé de traitement des eaux usées selon la revendication 1, **caractérisé en ce**
**que** le séchage (19) est un séchage en lit fluidisé dans la zone à vapeur en surpression, et
**que** des composants se formant du fait du séchage en lit fluidisé lors du séchage (19) sont amenés avec la vapeur aux fractions des boues d'épuration dans l'hydrolyse (8) thermique.

3. Procédé de traitement des eaux usées selon la revendication 1 ou 2, **caractérisé en ce**
**qu'**ensuite une décomposition (5, 11) est réalisée avec les fractions des boues d'épuration soumises à l'hydrolyse (8) thermique.

4. Procédé de traitement des eaux usées selon la revendication 3, **caractérisé en ce**
**qu'**une déshydratation mécanique des boues d'épuration soumises à la décomposition est effectuée entre l'étape de la décomposition (5, 11) et celle du séchage (19) dans le groupe de déshydratation ultérieure (15).

5. Procédé de traitement des eaux usées selon l'une quelconque des revendications 3 ou 4,
**caractérisé en ce**
**qu'**une décomposition (5, 11) séparée d'une part des boues d'épuration hydrolysées et d'autre part des boues d'épuration provenant des eaux usées est réalisée.

6. Procédé de traitement des eaux usées selon l'une quelconque des revendications 1 ou 2,
**caractérisé en ce**
**qu'**un traitement des eaux usées est prévu sans décomposition (5, 11), et que les boues d'épuration séchées sont amenées à une monocombustion et les fumées émanant du four se formant à forte puissance calorifique sont utilisées dans une postcombustion pour produire de la vapeur pour un séchage à haute température.

7. Procédé de traitement des eaux usées selon l'une quelconque des revendications 3 à 5,
**caractérisé en ce**
**qu'**une partie de la vapeur se formant lors du séchage (19) est employée pour une désorption en phase vapeur d'ammoniaque à partir des eaux séparées des boues d'épuration hydrolysées et décomposées.

8. Procédé de traitement des eaux usées selon l'une quelconque des revendications précédentes,
**caractérisé en ce**
**qu**'une partie de la vapeur se formant lors du séchage (19) est employée pour la déshydratation mécanique des boues d'épuration et/ou pour le fonctionnement de micro-turbines ou de turbines de petite taille et/ou pour la concentration d'eaux salées.

9. Procédé de traitement des eaux usées selon l'une quelconque des revendications précédentes,
**caractérisé en ce**
**qu**'une récupération de phosphore est réalisée à partir des eaux boueuses retirées lors de la déshydratation ou à partir des boues d'épuration amenées à la déshydratation.

10. Ensemble pour le traitement des eaux usées,
avec un dispositif d'hydrolyse (8) pour le traitement par hydrolyse de boues d'épuration, et
avec un dispositif de séchage (19) pour sécher les boues d'épuration,
**caractérisé en ce**
**qu**'est prévu un groupe de déshydratation ultérieure (15), qui est raccordé au dispositif d'hydrolyse (8),
**que** le groupe de déshydratation ultérieure (15) est relié au dispositif de séchage (19) par l'intermédiaire d'un conduit (16),
**que** les boues d'épuration amenées par l'intermédiaire du conduit (16) présentent environ 30 % de substance sèche,
**que** le dispositif de séchage (19) est un dispositif de séchage fonctionnant dans la zone à vapeur en surpression,
**qu'**un dispositif d'amenée (20) est prévu pour l'amenée de la vapeur, se formant dans le dispositif de séchage (19) fonctionnant dans la zone à vapeur en surpression vers le dispositif d'hydrolyse (8), et
**que** le dispositif d'hydrolyse (8) est élaboré de telle sorte qu'il réalise un mélange de la vapeur amenée aux boues d'épuration.

11. Ensemble pour le traitement des eaux usées selon la revendication 10, **caractérisé en ce**
**que** le dispositif de séchage (19) est un dispositif de séchage en lit fluidisé, et
**que** des composants se formant du fait du séchage en lit fluidisé lors du séchage (19) sont amenés avec la vapeur aux fractions des boues d'épuration dans l'hydrolyse (8) thermique.

12. Ensemble pour le traitement des eaux usées selon la revendication 10 ou 11,
**caractérisé en ce**
**qu**'au moins un contenant de décomposition (5, 11), par exemple une tour de décomposition, est prévu, lequel est raccordé indirectement ou directement au dispositif d'hydrolyse (8).

13. Ensemble pour le traitement des eaux usées selon la revendication 12, **caractérisé en ce**
**que** le groupe de déshydratation ultérieure (15) est relié indirectement ou directement au ou aux contenants de décomposition (5, 11).

14. Ensemble pour le traitement des eaux usées selon l'une quelconque des revendications 12 ou 13,
**caractérisé en ce**
**que** sont prévus au moins deux contenants de décomposition (5, 11), dont un contenant de décomposition (5) est prévu pour un excédent de boues provenant du dispositif d'hydrolyse (8) et un autre contenant de décomposition (11) est prévu pour de la boue primaire des boues d'épuration contenues dans les eaux usées (0).

15. Ensemble pour le traitement des eaux usées selon l'une quelconque des revendications 10 ou 11,
**caractérisé en**
**qu**'un traitement des eaux usées est prévu sans contenant de décomposition (5, 11), et
**que** les boues d'épuration séchées sont amenées à une installation de combustion, en particulier à une installation de monocombustion ou à une installation de combustion de déchets, ou une installation de vitrification à chaud et les fumées émanant du four se formant à forte puissance calorifique sont utilisées dans une postcombustion pour produire de la vapeur pour un séchage à haute température et/ou pour la production de courant.

16. Ensemble selon l'une quelconque des revendications 10 à 15, **caractérisé en ce**
**qu**'est prévu un dispositif de désorption (17) d'ammoniaque, lequel est raccordé au dispositif de séchage (19).

17. Ensemble pour le traitement des eaux usées selon l'une quelconque des revendications 10 à 16,
**caractérisé en ce**
**qu**'est prévue une étape de récupération de phosphore.
